# EUROPEAN PATENT APPLICATION

(11) **EP 4 203 475 A1**
(43) Date of publication of application: **28.06.2023**
(21) Application number: 21306901.6
(22) Date of filing: 22.12.2021
(51) Int. Cl.: H04N 19/40, H04N 19/42

(54) **METHOD FOR MANAGING ENCODING OF MULTIMEDIA CONTENT AND APPARATUS FOR IMPLEMENTING THE SAME**

(71) Applicant: ATEME, 78140 Velizy Villacoublay (FR)
(72) Inventor: MOUSSAOUI, Abdelmajid, 91140 VILLEBON-SUR-YVETTE (FR); PEJHAN, Sassan, PRINCETON, 08540 (US); GUIONNET, Thomas, 35000 RENNES (FR); LE GALL, Chrystelle, 92130 ISSY LES MOULINEAUX (FR); BOUCHARD, David, 35200 RENNES (FR)
(74) Representative: Plasseraud IP

(57) **Abstract**

A method for managing encoding of multimedia content stored in a file is proposed, which comprises: determining, using a supervised learning algorithm, a prediction of processing resources required for encoding the multimedia content, based on one or more multimedia content characteristics of the multimedia content and on one or more multimedia content encoding parameters for encoding the multimedia content; and determining a processing configuration for encoding the multimedia content based on the prediction of processing resources.

## Description

The present disclosure relates to the field of multimedia content encoding, in particular of management of multimedia content encoding resource consumption.

Cloud providers offer users a wide array of choices when it comes to cloud resource usage. Users can specify computational resources, such as a CPU type and a number of CPU cores, use of fixed vs. burstable CPU usage, and other resource parameters, such as the amount of memory, storage needs, reserved vs. pre-emptible resources, etc. to be allocated for performing their task(s). Users have to make choices with respect to these multiple parameters.

When video encoding multimedia content (e.g. video content), the encoder uses CPU, memory and other resources to perform the task. Estimating those resource needs is a non-trivial exercise, as the amount of resources required (CPU, memory, storage, bandwidth) may be influenced by a variety of factors. In addition, when performing video encoding, the resources consumed are not constant and can vary depending on other criteria. This decision process is made even more complex given that the user can choose among multiple cloud providers.

Conventional schemes for resource allocation for video encoding or transcoding in the cloud are typically based on the encoding/transcoding resolution (Standard Definition (SD), High Definition (HD) or Ultra HD (UHD)) only. This implies that the resources allocated for a task are sometimes oversized - meaning wasting resources - or sometimes undersized - meaning taking more time to finish the task or decreasing video quality in some cases.

There is therefore a need for an improved multimedia content encoding management scheme and apparatus implementing the same that address at least some of the above-described drawbacks and shortcomings of the conventional technology in the art.

It is an object of the present subject disclosure to provide an improved multimedia content encoding scheme and apparatuses implementing the same.

Another object of the present subject disclosure is to provide an improved multimedia content transcoding scheme and apparatuses implementing the same.

Another object of the present subject disclosure is to provide an improved multimedia content encoding scheme and apparatuses implementing the same for alleviating the above-described drawbacks and shortcomings of conventional video encoding schemes.

Another object of the present subject disclosure is to provide an improved multimedia content transcoding scheme and apparatuses implementing the same for alleviating the above-described drawbacks and shortcomings of conventional video encoding schemes.

To achieve these objects and other advantages and in accordance with the purpose of the present subject disclosure, as embodied and broadly described herein, in one aspect of the present subject disclosure, a method of managing encoding of multimedia content stored in a file, comprising: determining, using a supervised learning algorithm, a prediction of processing resources required for encoding the multimedia content, based on one or more multimedia content characteristics of the multimedia content and on one or more multimedia content encoding parameters for encoding the multimedia content, and determining a processing configuration for encoding the multimedia content based on the prediction of processing resources.

Advantageously, the complex task of determining values of a plurality of resource allocation parameters for defining a processing configuration according to which resources are allocated for encoding or transcoding an input file containing multimedia content data may according to the present subject disclosure be handled by a supervised learning algorithm.

Using a supervised learning algorithm (sometimes also referred to as a "machine learning algorithm" or "ML" algorithm) advantageously allows to individually optimize resource usage (for example cloud resource usage) for each multimedia content to be encoded and specific processing requirements for encoding (or transcoding) that multimedia content.

The supervised learning algorithm may also advantageously be continuously trained for each instance of determining optimum resource allocation parameter values for the processing of an input file.

Using a supervised learning algorithm advantageously avoids the need for computing one or more values of resource allocation parameters, and hand-tuning such values. As a consequence, a larger number of resource allocation parameters can advantageously be taken into account for purposes of determining a processing configuration for encoding the multimedia content, through using the prediction of processing resources determined by the supervised learning algorithm, thereby providing a more optimized processing configuration for encoding the multimedia content.

In one or more embodiments, the proposed method further comprises: encoding the multimedia content by a video encoder configured with the processing configuration.

In one or more embodiments, the processing configuration comprises a configuration of a cloud instance, and the encoding the multimedia content is performed by the cloud instance configured with the configuration of the cloud instance.

In one or more embodiments, the proposed method further comprises a training phase for training a neural network implementing the supervised learning algorithm performed on a plurality of training multimedia content files, the training phase comprising, for a training multimedia content file of the plurality of training multimedia content files: determining, based on the training multimedia content file, a reference prediction of processing resources required for encoding a training multimedia content contained in the training multimedia content file, performing training of the neural network based on input data comprising one or more multimedia content characteristics of the training multimedia content and on one or more multimedia content encoding parameters for encoding the training multimedia content, and based on the reference prediction of processing resources, to generate a prediction model for predicting a prediction of processing resources required for encoding multimedia content.

In one or more embodiments, the training phase further comprises, for the training multimedia content file: performing a plurality of encodings of the training multimedia content file using respective combinations of the one or more multimedia content encoding parameters; determining, for each of the plurality of encodings, a respective result.

In one or more embodiments, one or more of the respective results comprise a respective combination of one or more performance metrics.

In one or more embodiments, the one or more multimedia content characteristics are of one or more of the following types of characteristic: a type of the multimedia content, a duration of the multimedia content, a resolution of the multimedia content, one or more video characteristics of the multimedia content, and one or more audio characteristics of the multimedia content.

In one or more embodiments, the one or more multimedia content encoding parameters are of one or more of the following types of encoding parameters: a video compression standard, a number of output streams and their corresponding resolution, bitrate and/or quality setting, pre-processing requirements, an audio compression standard, and a required turnaround time.

In one or more embodiments, the prediction of processing resources comprises one or more resources of one or more of the following types of processing resource: type of public cloud instance, CPU resources, RAM resources, storage type, public cloud provider, and time of the day.

In one or more embodiments, the prediction of processing resources comprises a performance level associated with processing resources, and corresponding to one or more performance metrics, and wherein the processing configuration is determined based on the performance level of the associated processing resources.

In one or more embodiments, one or more of the performance metrics are of one or more of the following types of performance metrics: time to encode, encoding speed versus real time, average CPU usage, peak CPU usage, average memory usage, peak memory usage, amount of storage usage, type of storage usage, visual quality of output stream, bit-rate of output stream.

In one or more embodiments, the proposed method further comprises: determining the one or more characteristics of the multimedia content based on the multimedia content, wherein the one or more characteristics are of respective predetermined types of characteristic.

In one or more embodiments, the proposed method further comprises: obtaining one or more multimedia content classes, and selecting a multimedia content class among the one or more multimedia content classes based on the one or more characteristics of the multimedia content, wherein the prediction of processing resources is determined based on the selected multimedia content class.

In one or more embodiments, at least one multimedia content class is predetermined.

In one or more embodiments, at least one multimedia content class is determined using a statistical classification algorithm during a training phase of the statistical classification algorithm.

In another aspect of the present subject disclosure, an apparatus is proposed, which comprises a processor, and a memory operatively coupled to the processor, wherein the apparatus is configured to perform a method as proposed in the present subject disclosure.

In yet another aspect of the present subject disclosure, a video encoder is proposed, which is configured to encode video content comprising a plurality of images, an comprises an apparatus as proposed configured to perform a method as proposed in the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

For example, in some embodiments, the present subject disclosure provides a non-transitory computer-readable medium encoded with executable instructions which, when executed, causes an apparatus comprising a processor operatively coupled with a memory, to manage the encoding of a multimedia content, such as a video sequence, or more generally digital video data, by performing a method of managing encoding of multimedia content stored in a file, comprising: determining, by the processor, using a supervised learning algorithm, a prediction of processing resources required for encoding the multimedia content, based on one or more multimedia content characteristics of the multimedia content and on one or more multimedia content encoding parameters for encoding the multimedia content, and determining, by the processor, a processing configuration for encoding the multimedia content based on the prediction of processing resources.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed.

In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1 illustrates an exemplary method according to one or more embodiments of the present subject disclosure;
Figure 2a is a block diagram that illustrates an exemplary method according to one or more embodiments of the present subject disclosure;
Figure 2b is a block diagram that illustrates an exemplary method according to one or more embodiments of the present subject disclosure;
Figure 2c is a block diagram that illustrates an exemplary method according to one or more embodiments of the present subject disclosure;
Figure 3a is a block diagram that more particularly illustrates an exemplary apparatus or unit configured to use one or more features in accordance with one or more embodiments of the present subject disclosure.
Figure 3b is a block diagram that more particularly illustrates an exemplary apparatus or unit configured to use one or more features in accordance with one or more embodiments of the present subject disclosure.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present subject disclosure to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present subject disclosure refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

"Server" or "platform" in the present subject disclosure means any (virtualized or non-virtualized) point of service or computer device or system performing data processing operations, one or more databases, and/or data communication functions. For example, and without limitation, the term "server" or the term "platform" may refer to a physical processor operationally coupled to associated communication, database and data storage functions, or refer to a network, a group, a set or a complex of processors and associated data storage and networking equipment, and to an operating system and one or more database system(s) and application software supporting the services and functions provided by the server. A server or platform may be configured to operate in or as part of a cloud computing environment. A computer device or system may be configured so as to send and receive signals, via wireless and/or wired transmission networks(s), or be configured so as to process and/or store data or signals, and may therefore operate as a server. Equipment configured so as to operate as a server may thus include, by way of non-limiting example, dedicated servers mounted on a rack, cloud-based servers, desktop computers, laptop computers, service gateways (sometimes called "box" or "home gateway"), multimedia decoders (sometimes called "set-top boxes"), integrated equipment combining various functionalities, such as two or more of the abovementioned functionalities. The servers may vary greatly in terms of their configuration or their capabilities, but a server will generally include one or more central processing unit(s) and a memory. A server may also include one or more item(s) of mass memory equipment, one or more electric power supply/supplies, one or more wireless and/or wired network interface(s), one or more input/output interface(s), one or more operating system(s), such as Windows Server, Mac OS X, Unix, Linux, FreeBSD, or an equivalent.

The terms "multimedia content" as used in the present subject disclosure mean any audio and/or video content, subtitles, data, audio-visual content, music, sound, image, or interactive graphical interface, and any combination of these types of content.

In the present description, the terms "terminal", "user equipment", "reader", "reading device", "reading terminal" and "video reader" are used interchangeably to denote any type of device, implemented by one or more items of software, one or more items of hardware, or a combination or one or more items of software and one or more items of hardware, configured so as to use multimedia content distributed in accordance with a distribution protocol, for example a multi-screen distribution protocol, in particular by loading and by reading the content. The terms "client" and "video-reading client" are also used interchangeably to denote any type of device, software and/or hardware, or any function or set of functions, implemented by software and/or hardware within a device and configured so as to use multimedia content distributed in accordance with a distribution protocol, for example a multi-screen distribution protocol, in particular by loading the content from a server and by reading the content.

The terms "network" and "communication network" as used in the present description refer to one or more data links that may couple or connect possibly virtualized equipment so as to allow electronic data to be transported between computer systems and/or modules and/or other devices or electronic equipment, such as between a server and a client device or other types of devices, including between wireless devices that are coupled or connected via a wireless network, for example. A network may also include a mass memory for storing data, such as a NAS (network attached storage), a SAN (storage area network) or any other form of computer-readable or machine-readable medium, for example. A network may comprise, in full or in part, the Internet, one or more local area networks (LAN), one or more wide area networks (WAN), wired connections, wireless connections, cellular connections or any combination of these various networks. Similarly, subnetworks may use various architectures or conform with or be compatible with various protocols, and interoperate with larger networks. Various types of equipment may be used to make various architectures or various protocols interoperable. For example, a router may be used to provide a communication link or a data link between two LANs that would otherwise be separate and independent.

The terms "cloud computing," "cloud," and "cloud-based environment" are used interchangeably to denote any type of pooling of software, infrastructure and platform resources from disparate networks that can be accessed by a client via the Internet, to provide an on-demand availability of computer system resources, especially data storage (cloud storage) and computing power, without direct active management by the user. Large clouds often have functions distributed over multiple locations, each location being a data center. In some cases, network gateways may be used to connect public or external clouds, private or internal clouds (owned by a single entity) and/or community clouds (owned by several cooperating entities), thereby creating a hybrid cloud computing environment.

The terms "cloud instance" as used in the present description refer to a virtual server instance from a public or private cloud network. In cloud instance computing, single hardware is implemented into software and may run on top of multiple computers or computing machines. Resources can be flexibly allocated to and from other computers by the software, enabling maximum utilization and helping to prevent overloads. If the server grows beyond the limits of a single machine, cloud instance computing allows the cloud software to be implemented by a plurality of machines. Therefore, because cloud instance computing is highly dynamic, can reassign resources as needed, and allows for the movement of servers as they run in the cloud, it provides a computing environment which is particularly well suited for tasks such as encoding or transcoding video content of multimedia content stored in one or more files (as opposed to encoding multimedia content streams for distribution in dynamic mode to viewing devices, such as over an Over-The-Top (OTT) network infrastructure).

In the present description, the terms "encoding a multimedia content", "encoding job", "job", "task", "encoding task" are used interchangeably to denote any type of encoding or, in some embodiments, transcoding of any content of the multimedia content, and may comprise, depending on the embodiment, the video encoding (or, as the case may be transcoding) of video content of the multimedia content and/or audio encoding (or, as the case may be transcoding) of audio content of the multimedia content. The methods proposed in the present subject disclosure may be implemented by any video encoder or video codec configured for encoding multimedia content, such as video sequences, of input multimedia content data stored in a file, using a processing configuration determined according to embodiments of the proposed method, such as, for example a video encoder or codec compliant with any of the H.261, MPEG-1 Part 2, H.262, MPEG-2 Part 2, H.264/AVC, H.265/HEVC, H.266/VVC, MPEG-4 Part 2, and SHVC (Scalable HEVC) specifications or standards, whether in their existing versions and/or their evolutions. In addition, the methods proposed in the present subject disclosure are particularly well suited for determining a processing configuration for the encoding or transcoding in a cloud-based environment multimedia content stored in a file, in which case the proposed method may advantageously provide a configuration of a cloud instance (including configuration parameters that are cloud specific) for performing the encoding or transcoding of the input multimedia content by the cloud instance.

In the following, embodiments of the proposed methods, apparatuses and computer programs are described for the exemplary encoding of a multimedia content. However, it will be appreciated by those having ordinary skill in the relevant art that embodiments of the proposed methods, apparatuses and computer programs may be used for other processing involving an encoding of a multimedia content, such as for example the transcoding of a multimedia in place of, or comprising the video encoding of a multimedia content, which is given by way of example only.

When encoding multimedia content, such as video content, stored in memory in a file (referred to as the "original file"), the encoder uses CPU, memory and other processing resources to perform the task. The amount of processing resources required (CPU, memory, storage, bandwidth) depends on several factors, including the original file resolution (SD, HD, UHD), but also the type of video codec used (MPEG-2, AVC, HEVC, AV1, etc.), the actual video content of the multimedia content, the desired number of outputs, as well as their resolutions, bitrates and/or quality settings, the bit depth, the frame rate, and the required turnaround time. When performing video encoding, the resources consumed are therefore not constant and can vary depending on these and other criteria.

The present subject disclosure advantageously proposes to use a supervised learning algorithm, for example implemented by a neural network, to optimize the resource allocation required for performing a multimedia content encoding task, for example on servers in the cloud.

Example implementations may be described in the context of the encoding of vieo content of a multimedia content stored in a file in a cloud-based (or cloud computing) processing environment (for example by a cloud instance), but it should be understood that example implementations may be equally applicable to other computing environments, such as, for instance, the encoding of video content of the multimedia content by an encoder implemented on a server or other computing machine which is not, in full or in part, cloud-based.

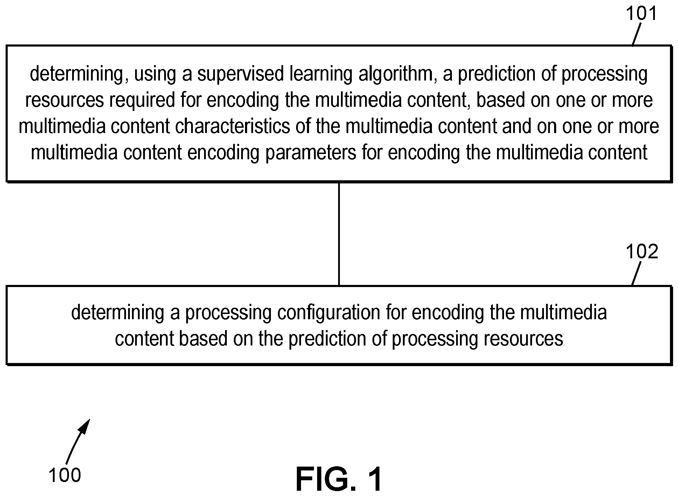

Figure 1 illustrates an exemplary multimedia content encoding management method 100 according to one or more embodiments of the present subject disclosure.

Multimedia content (e.g. a video sequence) which is to be encoded (e.g. video encoded) stored in one or more files in a memory is considered as input of the proposed method, and may be indifferently referred to in the following as the multimedia content, the "original" multimedia content, or the "input" multimedia content. For example, the proposed method may use, as input data, video data (e.g. corresponding to a movie, a documentary, or any other type of video content) stored in an input file in memory.

In one or more embodiments, data of the multimedia content is stored in a memory as a data file.

In one or more embodiments, a prediction of resources required for encoding the input multimedia content is determined (101) using a supervised learning algorithm, based on one or more multimedia content characteristics of the multimedia content and one or more multimedia content encoding parameters for encoding the multimedia content.

In one or more embodiments, multimedia content data stored in the data file may be processed as input of a trained neural network implementing the supervised learning algorithm to generate as output the prediction of resources, such as processing resources, required for encoding the multimedia content.

In one or more embodiments, a processing configuration for encoding the multimedia content may be determined (102) using the prediction of resources determined using the supervised learning algorithm. The determination of the processing configuration may be adapted to the computing platform which is to be used for encoding the input multimedia content, and may therefore comprise assigning values to specific configuration parameters of such computing platform based on the determined prediction of resources. Advantageously, the parameters used to define the prediction of resources may be mapped to specific configuration parameters usable for defining the processing configuration of the computing platform.

Depending on the embodiment, the proposed method may be implemented in any suitable computing system configured for implementing the proposed method according to embodiments of the present subject disclosure. Depending on the embodiment, the computing system may be implemented in hardware, software, firmware, middleware, microcode, or any suitable combination thereof. Further, depending on the embodiment, some or all of the parts of the computing system that are implemented in software may be configured to run in the cloud or, alternatively, on premises (e.g. on a server which is not cloud-based).

The proposed method may advantageously be used in one or more embodiments for cloud-based encoding of the multimedia content. In such cases the processing configuration determined based on the prediction generated by the supervised learning algorithm may comprise a configuration of a cloud instance, for example comprising values of cloud resource parameters required for performing the processing task in the cloud, such as, depending on the relevant cloud environment (e.g. depending on the cloud provider), a CPU type, a number of CPU cores, a memory amount, storage, use of fixed vs. burstable CPU usage, reserved vs. pre-emptible resources, etc.

Therefore, advantageously, in some embodiments, the proposed scheme may be used to optimize cloud resource usage for encoding each of a plurality of multimedia contents, taking into account encoding requirements that may be specific to each of the plurality of multimedia contents.

In one or more embodiments, different types of input parameters may be used as input data of the supervised learning algorithm for generating as output a prediction of processing resources required for encoding an input multimedia content. In some embodiments, the determination of the prediction may be based on a combination of one or more multimedia content characteristics of the multimedia content, and one or more multimedia content encoding parameters for encoding the multimedia content, provided as input data to the supervised learning algorithm.

In one or more embodiments, parameters describing characteristics of the multimedia content (that may in the following be denoted as "category A" parameters) may be provided in the input data provided to the supervised learning algorithm, and may include one or more of the following : a type of the multimedia content (e.g. movie, TV show, serie, live event, documentary, news, etc.), a genre of the multimedia content (e.g. comedy, romance, action, family, suspense, etc.), a duration of the multimedia content (e.g. expressed as a time duration, a start time and an end time, a number of frames, etc.), one or more video characteristics of the multimedia content (e.g. one or more of a resolution, a bit-depth, a frame rate, etc.), and one or more audio characteristics of the multimedia content (e.g. one or more of a number of channels, a sampling rate, a bit depth, etc.).

Examples of parameters related to characteristics of the multimedia content that may be provided as input data to the supervised learning algorithm are provided in the following:
In one or more embodiments, multimedia content related parameters that may be provided as input data to the supervised learning algorithm may comprise parameters related to characteristics and/or descriptors of the multimedia content.
In some embodiments, descriptors (such as genre and subgenre of the multimedia content) of the multimedia content may be provided in metadata, for example in a metadata file associated with the multimedia content file, created during post-production.
In some embodiments, other descriptors, such as multimedia content duration (e.g. duration of the video stream of the multimedia content), and video and audio characteristics, may also be available from the container file format (e.g., MP4 or MPEG-2 TS).
In one or more embodiments, characteristics of the multimedia content parameters may include one or more of the following:
   Type of multimedia content input parameter(s): for example, a type of content parameter that may be used in the input data of the supervised learning algorithm may be assigned a value corresponding to one or more of the following: sports content, movie, news, nature documentary, talk show, advertisement, etc. Some content types - such as sports and nature documentaries - are more challenging to encode due to fast movement of objects, camera panning, lack of control over light sources and highly textured content. In contrast, other types of content such as talks shows are much easier to encode: there is very little motion, cameras are typically fixed with limited panning and zooming (if any), and light sources are controlled inside a studio setting.
   Duration of multimedia content input parameter(s): for example, a parameter describing the duration of a video content comprised in the multimedia content that may be used in the input data of the supervised learning algorithm may be assigned a value expressed - depending on the embodiment - in a time unit or in a number of frames. Video content characteristics parameter(s): for example, one or more parameters describing one or more characteristics of a video content comprised in the multimedia content that may be used in the input data of the supervised learning algorithm may be assigned value(s) corresponding to one or more of the following characteristics: resolution, bit-depth, frame rate, etc.
   Audio content characteristics parameter(s): for example, one or more parameters describing one or more characteristics of an audio content comprised in the multimedia content that may be used in the input data of the supervised learning algorithm may be assigned value(s) corresponding to one or more of the following characteristics: number of channels, sampling rate, bit-depth, etc.
In one or more embodiments, parameters describing the encoding of the multimedia content (that may in the following be denoted as "category B" parameters) may be provided in the input data provided to the supervised learning algorithm, and may include one or more of the following: a video compression standard, a number of output streams and their corresponding resolution, bitrate and/or quality setting, pre-processing requirements, an audio compression standard, and a required turnaround time.

Examples of parameters related to encoding of the multimedia content that may be provided as input data to the supervised learning algorithm are provided in the following:
In one or more embodiments, multimedia content encoding parameters for encoding the multimedia content that may be provided as input data to the supervised learning algorithm may comprise one or more of the following encoding configuration parameters:
   Video compression standard parameter(s): for example, one or more parameters describing a video compression standard to be used for encoding video content comprised in the multimedia content that may be used in the input data of the supervised learning algorithm may be assigned value(s) corresponding to one or more of the following: MPEG-2, AVC, HEVC, AV1, VVC, etc.
   Video compression output description parameter(s): for example, one or more parameters describing one or more characteristics of a video compression output stream of the multimedia content that may be used in the input data of the supervised learning algorithm may be assigned value(s) corresponding to one or more of the following: number of output streams and their corresponding resolution, bitrate and quality settings, etc.
   Pre-processing requirements parameter(s): for example, one or more parameters describing pre-processing requirements of a video encoding of the multimedia content that may be used in the input data of the supervised learning algorithm may be assigned value(s) corresponding to one or more of the following: decoding in the case of pre-encoded assets, transfer function conversions such as SDR to HDR and vice versa, film grain analysis and synthesis for grainy content, etc.
   Audio compression standard parameter(s): for example, one or more parameters describing an audio compression standard to be used for encoding audio content comprised in the multimedia content that may be used in the input data of the supervised learning algorithm may be assigned value(s) corresponding to one or more of the following: AAC, AC3, E-AC3, AC-4, MPEG-H, etc.
   Required turnaround time parameter(s): for example, one or more parameters describing a required turnaround time (how soon the multimedia content needs to be encoded) may be used in the input data of the supervised learning algorithm.
   Depending on the embodiment, the input data provided to the supervised learning algorithm may include a combination of one or more of the above-described multimedia content encoding parameters and multimedia content characteristics parameters, in some embodiments as a weighted combination with individual weightings for each parameter.
In one or more embodiments, a prediction of processing resources required for encoding the input multimedia content may be determined by a supervised learning algorithm implemented by a neural network (for example operating in inference mode), to which input data as described above is provided. The output data generated by the neural network implementing the supervised learning algorithm may comprise a prediction of processing resources required for encoding the input multimedia content, which prediction may, depending on the embodiment, be defined by different types of output parameters.
In one or more embodiments, output parameters may comprise processing resource parameters and/or encoding performances parameters.
In one or more embodiments, parameters describing processing resources (that may in the following be denoted as "category C" parameters) may be provided in the output data generated by the supervised learning algorithm, and may include one or more of the following:
   In one or more embodiments, the prediction of processing resources may comprise one or more resources of one or more of the following types of processing resources: computational resources (also referred to as "CPU resources") (e.g. speed, number of cores, type of architecture (e.g. RISC vs. CISC), etc.), RAM resources (size, speed, etc.), storage type resources (hot vs. cold, etc.).
In one or more embodiments, parameters related to processing resources that may be generated as output data by the supervised learning algorithm may comprise one or more of the following: computational resource parameter(s) (e.g. number of vCPU and RAM), and storage type.
In one or more embodiments in which the encoding of the multimedia content is performed in a cloud computing environment (e.g. by cloud-based servers), parameters related to processing resources that may be generated as output data by the supervised learning algorithm may in addition comprise one or more of the following cloud instance configuration parameters:
   - type of public cloud instance,
   - cloud-based service computational resource parameter(s),
   - public cloud provider,
   - time of the day,
   - cloud-based service related information (on-demand, reserved, pre-emptible), and
   - environmental footprint, which may include both the amount of energy consumed, as well as the source of that energy (fossil fuels vs. renewables such as wind and solar). A cleaner energy source will result in smaller penalty/weighting being associated with the power consumed. As businesses become more environmentally conscious, there is greater transparency with regards to both energy consumption as well as sources of energy. The energy ratings of cloud resources that are made available - CPUs in particular - are readily available to users of these resources. In addition, cloud providers may advertise the percentage of their power consumption that comes from clean and renewable energy sources vs. fossil fuels and other non-renewable sources.

Therefore in one or more embodiments, the prediction of processing resources may comprise one or more resources of one or more of the following types of processing resource: type of public cloud instance, public cloud provider, time of the day, and environmental footprint.

In one or more embodiments, the prediction of processing resources may comprise a performance level associated with processing resources, and corresponding to one or more performance metrics. The processing configuration may in these embodiments be determined based on the performance level of the associated processing resources.

In one or more embodiments, parameters describing encoding performances (that may in the following be denoted as "category D" parameters) may be provided in the output data generated by the supervised learning algorithm, and may include one or more of the following:
In one or more embodiments, the output data may comprise values of performance metrics describing performances of the encoding of the input multimedia content that can be expected for such encoding being performed using the predicted processing resources.

In one or more embodiments, one or more of the performance metrics are of one or more of the following types of performance metrics: time to encode, encoding speed versus real time, average CPU usage, peak CPU usage, average memory usage, peak memory usage, amount of storage usage, type of storage usage, visual quality of output stream, and bit-rate of output stream.

In one or more embodiments, the proposed method further comprises implementing a training phase for purposes of training the neural network that implements the supervised learning algorithm. Indeed, as with all supervised learning algorithms, the decision making process may first be trained using a training data set.

In one or more embodiments, the training phase may comprise providing a plurality of training multimedia content files as input to the supervised learning algorithm and, for a training multimedia content file of the plurality of training multimedia content files: determining, based on the training multimedia content file, a reference prediction of processing resources required for encoding a training multimedia content contained in the training multimedia content file, and performing training of the neural network based on input data comprising one or more multimedia content characteristics of the training multimedia content and on one or more multimedia content encoding parameters for encoding the training multimedia content, and based on the reference prediction of processing resources, to generate a prediction model for predicting a prediction of processing resources required for encoding multimedia content.

In one or more embodiments, the training data may include a large sample of various multimedia contents that were encoded, for example in the cloud, under a wide range of conditions. Variety of the multimedia contents that may be used as training data may be achieved by choosing multimedia contents for which one or several of the category A and category B parameters described above are very different from one training multimedia content to the other. In each case, resource usage, such as cloud resource usage, may be measured and recorded, so as to incorporate in the training data set resource usage data that will be expected as output data in inference mode.

In one or more embodiments, during the training phase, training multimedia content files may be used as input files for generating output data that is fed, together with the respective training multimedia content files, to the neural network implementing the supervised learning algorithm for training the neural network.

In some embodiments, processing jobs may be defined as sets of one or more multimedia content characteristics parameters values and one or more multimedia content encoding parameters values (for example as described above) corresponding to respective training multimedia contents. For example, a processing job corresponding to a training multimedia content defined for the training phase may take the form of a vector composed of individual multimedia content characteristics parameters values and one or more multimedia content encoding parameters values corresponding to or, as the case may be, determined for the training multimedia content, possibly with individual weightings for each parameter to weight the parameters with respect to each other.

The training multimedia content may then be encoded using various processing resource parameters, such as those described above. The performance results of the encoding may be measured using various encoding performances parameters, such as those described above, possibly with individual weightings for each parameter to weight the parameters with respect to each other.

In some embodiments, the results of the encoding of the same training multimedia content using different processing parameters may be compared (for example ranked), so as to select a set of processing resource parameters considered as optimum for the processing job, and define an optimum processing configuration for the training multimedia content based thereon.

In embodiments in which a processing job is represented by a vector, a classifier algorithm may be used in order to identify processing jobs, and group them into subpopulations, for example by using pattern recognition and statistical classification algorithms. A most optimized processing configuration may then be identified for each of the subpopulations, thereby advantageously providing a plurality of optimum processing configurations for the training multimedia content.

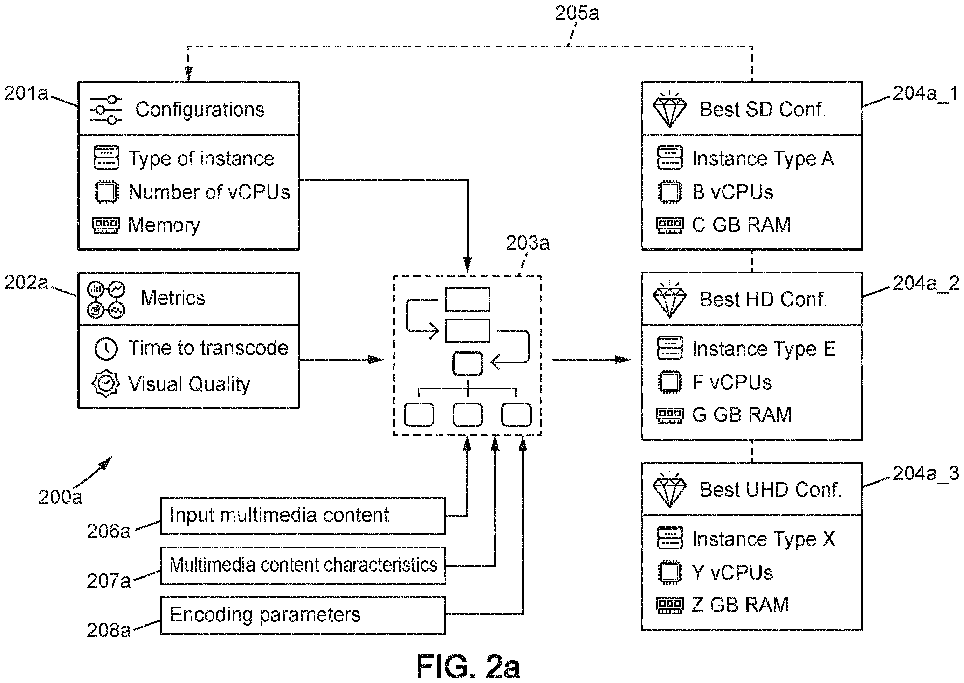

Fig. 2a illustrates an exemplary implementation of the proposed method generally designated 200a according to one or more embodiments.

Fig. 2a shows a neural network 203a receiving, as configuration data, template configuration data 201a and template performance metrics data 202a, for configuring the output generated by the neural network 203a.

In some embodiments, the template configuration data 201a may be used to indicate to the neural network 203a one or more format(s) and/or type(s) of parameters that are requested in the output data generated by the neural network 203a. For example, as illustrated by Fig. 2a, template configuration data 201a may comprise a parameter indicating a type of cloud instance if different types of cloud instance are available for encoding the input multimedia content, a parameter indicating a number of vCPUs, and a parameter related to memory usage.

In some embodiments, the template performance metrics data 202a may be used to indicate to the neural network 203a one or more format(s) and/or type(s) of performance metrics parameters that are expected in the output data generated by the neural network 203a. For example, as illustrated by Fig. 2a, template performance metrics data 202a may comprise a parameter indicating a prediction of a time to encode the input multimedia content and a visual quality of the encoding of the input multimedia content.

Once the neural network unit (203a) configured for implementing the supervised learning algorithm has been trained, the neural network may be used in inference mode, and a prediction of processing resources required for encoding the input multimedia content (206a) may be determined by the neural network unit (203a), based on one or more multimedia content characteristics of the multimedia content (207a), and on one or more multimedia content encoding parameters for encoding the multimedia content (208a), provided as input data to the neural network unit (203a).

In one or more embodiments, for a multimedia content that is to be encoded, thereby defining an encoding job, data (207a) describing to one or more characteristics of the multimedia content, such as one or more of the parameters of the above-described category A, and data (208a) describing one or more encoding parameters, such as one or more parameters of the above-described category B, may be provided as input data, together with the input multimedia content data (206a) to a computing system implementing a neural network unit (203a) configured for implementing a supervised learning algorithm configured for implementing the proposed method according to embodiments of the present subject disclosure. The computing system may comprise a neural network unit (203a) configured for implementing a supervised learning algorithm.

As illustrated on Fig. 2a, output data generated by the neural network unit (203a) may comprise a prediction of processing resources required for encoding the input multimedia content (206a), which comprises a plurality of configuration predictions (204a_1, 204a_2, 204a_3) respectively corresponding to different input multimedia content resolutions. For example, the prediction of processing resources generated by the neural network unit (203a) may comprise a first configuration prediction (204a_1) for a configuration deemed optimum for encoding a SD-resolution video content of the input multimedia content, a second configuration prediction (204a_2) for a configuration deemed optimum for encoding a HD-resolution video content of the input multimedia content, and a third configuration prediction (204a_3) for a configuration deemed optimum for encoding a UHD-resolution video content of the input multimedia content. In one or more embodiments, each of the first, second, and third configuration predictions may comprise data related to a type of cloud instance (in embodiments in which the encoding is to be performed in a cloud-based computing environment), data related to a number of CPU cores, and data related to a RAM memory amount. For example, the first configuration prediction (204a-1) may comprise data indicating a predetermined "type A" cloud instance, a number "B" of CPU cores, and a RAM memory amount of "C" GB, the second configuration prediction (204a-2) may comprise data indicating a predetermined "type E" cloud instance, a number "F" of CPU cores, and a RAM memory amount of "G" GB, and the third configuration prediction (204a-3) may comprise data indicating a predetermined "type X" cloud instance, a number "Y" of CPU cores, and a RAM memory amount of "Z" GB.

In one or more embodiments, the output data generated by the neural network unit (203a) may further comprise performance metrics prediction data (not represented on the figure) respectively associated with one or more of the first, second, and third configuration predictions (204a_1, 204a_2, and 204a_3), for example in the format and/or of the type requested in the template performance metrics data 202a. For example, as illustrated on Fig. 2a, in some embodiments, the output data generated by the neural network unit (203a) may comprise, for one or more of the first, second, and third configuration predictions (204a_1, 204a_2, and 204a_3), respective predicted times to encode the input multimedia content (206a), and respective predicted visual quality metrics of the encoded input multimedia content (206a).

In some embodiments, the neural network unit may be configured for, based on the input data, determine the closest sub-population for an encoding job, and identify resources, for example described by parameters such as parameters of the above-described category C, that are deemed most appropriate for the encoding job in view of performances, for example described by parameters such as parameters of the above-described category D, predicted for the encoding job using the resources.

Based on the most appropriate resources identified for the encoding job, a processing configuration for encoding the multimedia content may be determined. The processing configuration may typically be determined based on the type of processing environment (cloud-based or not, computing platform used for performing the encoding job, etc.) to be used for performing the encoding job. For example, in embodiments in which the encoding job is to be performed in a cloud environment, the processing configuration may comprise parameters defined by a cloud provider for specifying a processing job. As another example, in embodiments in which the encoding job is to be performed on a server platform which is not cloud-based, the processing configuration may comprise parameters specifically corresponding to the server platform.

In some embodiments, determining the processing configuration based on the prediction of processing resources may comprise adapting the data of the prediction to values of specific parameters usable for describing the encoding job on the processing environment to be used for performing the job. That is, the determining the processing configuration based on the prediction of processing resources may comprise determining values of specific parameters usable for describing the encoding job on the processing environment to be used for performing the job based on the prediction of processing resources.

For example, in one or more embodiments, the computing system may be configured for determining a specific processing configuration (e.g. a specific cloud resource configuration), for example expressed by values of one or more category C parameters, that come closest to meeting the desired performance, for example expressed by values of one or more category D metrics parameters, given specific input data, for example comprising values of one or more category A parameters related to the multimedia content to be encoding, and values of one or more category B parameters related to the encoding configuration to be used to encode the multimedia content.

In one or more embodiments, the multimedia content is encoded by a computing system (which may in some embodiments be cloud-based), such as an encoder, to produce data corresponding to the encoded multimedia content, which data may be stored in one or more files in memory. Therefore embodiments of the proposed method may be used to encode an input multimedia content stored in an input file to produce an encoded multimedia content stored in an output file.

In one or more embodiments, the input multimedia content may not include metadata that would otherwise be used to extract one or more characteristics of the multimedia content (for example values of one or more category A parameters related to the multimedia content). For example, there may not be any metadata file corresponding to the input multimedia content file available. In such embodiments, the proposed method may comprise performing an analysis of the input multimedia content that determines one or more of the characteristics of the multimedia content to be used for implementing the proposed method (to be included in the input data provided to the neural network implementing the supervised learning algorithm). For example, in some embodiments, characteristics such as genre may be derived by automatically analyzing the video, audio or closed captions/subtitles tracks, by using a video classification technique. For instance, cartoons and animations can be distinguished from natural video by analyzing image texture and color histograms. Other genres, such as sports or documentaries, can be identified by detecting keywords in the closed captions or audio tracks. Any suitable video classification technique of the conventional art may be used for purposes of performing an analysis of the multimedia content for determining one or more multimedia content characteristics of the multimedia content.

In one or more embodiments in which multiple cloud providers are available for the encoding job to be performed in a cloud-based environment, the computing system configured for implementing the proposed method according to embodiments of the present subject disclosure may be further configured to select a cloud provider deemed most appropriate for providing the cloud-based environment in which the job is to be performed. In such embodiments, the neural network implementing the supervised learning algorithm may be further configured to provide as output data a selection of a cloud provider among a plurality of available cloud providers.

In some embodiments, the prediction of processing resources may comprise an explicit selection of a cloud provider among a plurality of available cloud providers, for example through a value of an output parameter identifying the selected cloud provider. In other embodiments, the prediction of processing resources may comprise values of processing resources parameters that specifically correspond to a cloud provider which has been implicitly selected among a plurality of available cloud providers, or value of processing resources parameters, the format of which specifically corresponds to a cloud provider which has been implicitly selected among a plurality of available cloud providers.

In one or more embodiments in which the encoding job is performed in a cloud-based environment, the computing system configured for implementing the proposed method according to embodiments of the present subject disclosure may be further configured to take into account the time of the day, as the availability of resources may vary throughout the day.

In one or more embodiments, the computing system configured for implementing the proposed method according to embodiments of the present subject disclosure may be further configured for, once the multimedia content has been encoded, feeding back to the neural network unit the one or more multimedia content characteristics of the multimedia content and the one or more multimedia content encoding parameters for encoding the multimedia content that were used as input data of the neural network, and the processing configuration and the measured performance of the job (for example, measured per the metrics described above with respect of category D parameters), in order to use the results of the actual encoding of the multimedia content with measured performances as additional training data for the neural network. This advantageously allows improving the training of the neural network and/or adapting to changes in the computing environment in which the job is performed, such as, for example, the introduction of a new CPU in the computing resources of the computing environment.

For example, referring to Fig. 2a, in some embodiments, once the multimedia content (206a) has been transcoded in a cloud-based environment, the neural network (203a) may be fed (205a) with the characteristics of the multimedia content, the encoding configurations, the cloud configurations and the measured performance of the transcoding job (e.g. per the category D metrics described above), in order to keep improving and adapting to changes over time, such as the introduction of new CPUs and other cloud resources by the cloud providers. In particular, output data generated by the neural network unit (203a) when operating in inference mode may be fed back through a feedback loop (205a) to generate, together with the input data provided to the neural network unit (203a) a set of training data that may advantageously be used for improving and/or updating the training of the neural network unit (203a).

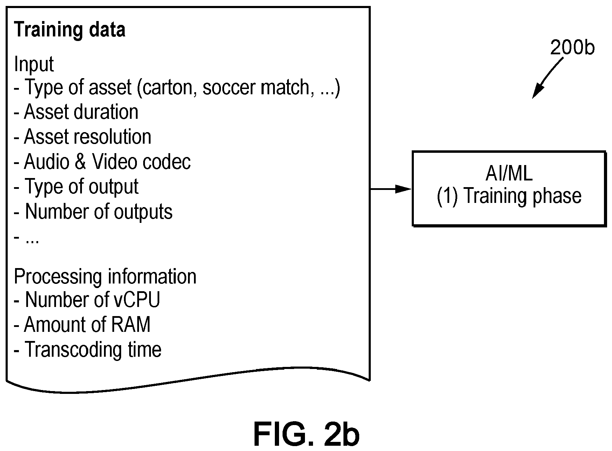

The following provides a description of an exemplary embodiment of the proposed scheme according to one or more embodiments of the present subject disclosure. Reference is made to Figs. 2b and 2d which respectively illustrate exemplary training and inference phases of a neural network configured for implementing one or more embodiments of the proposed method (respectively generally designated 200b and 200c).

In some embodiments, a supervised learning algorithm implemented by a neural network may be provided, both for instances of a training phase and instances of an inference phase, with input data comprising input multimedia content data (including, in some embodiments, metadata), values of one or more content related information parameters, and/or one or more user related information parameters:
Content-related information parameters (values of such parameters may be provided in metadata associated with the multimedia content) may comprise one or more of the following: duration of multimedia content, video content characteristics (such as resolution, bit-depth, frame rate, etc.), and audio content characteristics (such as number of channels, sampling rate, bit-depth, etc.).
Encoding or transcoding configuration parameters may comprise one or more of the following: one or more parameters identifying the video compression standard (e.g. MPEG-2, AVC, HEVC, AV1, VVC, etc.) to be used at an encoder or transcoder configured for encoding or transcoding the multimedia content; parameters describing a resolution, bitrate and quality settings, etc. of the output stream of an encoder or transcoder configured for encoding or transcoding the multimedia content, parameters describing a resolution; one or more pre-processing requirements parameters (such as decoding in the case of pre-encoded assets, transfer function conversions such as SDR to HDR and vice versa, film grain analysis and synthesis for grainy content, etc.); and one or more parameters identifying the audio compression standard (e.g. AAC, AC3, E-AC3, AC-4, MPEG-H, etc.).
Metadata (e.g. as specified in "ANSI/SCTE 236 2017, Content Metadata") may comprise one or more of the following:: <title:Year>, <title:Genre>, and/or <title:ShowType>.

User-related parameters may comprise one or more of the following: one or more parameters of an expected duration of the encoding or transcoding of the input multimedia content.

In some embodiments, the input data provided to the neural network implementing the supervised learning algorithm may be arranged into a numerical vector (e.g. a fixed-size or variable-size vector). The values can be either direct information on the input multimedia content (width, height, framerate, etc.) and/or booleans indicating predetermined features (codec, genre, etc.).

An example of an input data vector is provided below:

| | |
|---|---|
| Input frame width (nber of pixels) | 3840 |
| Input frame height (nber of pixels) | 2160 |
| Framerate (fps) | 24 |
| Duration (s) | 8100 |
| ... | |
| Output frame width (nber of pixels) | 1920 |
| Output frame height (nber of pixels) | 1080 |
| Output framerate (fps) | 24 |
| ... | |
| MPEG2 | 0 |
| AVC | 0 |
| HEVC | 1 |
| AV1 | 0 |
| ... | |
| Movie | 1 |
| TV Show | 0 |
| Serie | 0 |
| Live event | 0 |
| Documentary | 0 |
| News | 0 |
| ... | |
| Comedy | 0 |
| Romance | 1 |
| Action | 0 |
| Family | 0 |
| Suspense | 0 |
| ... | |

In some embodiments, the neural network implementing the supervised learning algorithm may generate, based on the above-described input data, a prediction of processing resources comprising a prediction of a number of vCPUs and amount of memory required for encoding the input multimedia content.

In some embodiments, a training procedure (1) is performed using training data, which may for example comprise predetermined input-output pairs through encoding of training multimedia content.

Referring to Fig. 2b, in some embodiments, training data may comprise data related to several training multimedia contents. In some embodiments, the training data related to each training multimedia content may comprise data generated from performing several encodings of the training multimedia content, each encoding being performed with a respective parameter set. The respective parameter set may comprise a respective set of encoding parameters and corresponding parameter values (such as, for example, one or more of the above-described category C encoding parameters), and a respective set of resource parameters and corresponding parameter values. The parameter sets and/or the values of the parameters that are used for the encodings of each training multimedia content may vary from one encoding to the other. For each encoding of a training multimedia content, one or more performance metrics, such as, for example, the encoding duration, may be measured and stored in association with the corresponding parameter set used for encoding the training multimedia content and the training multimedia content.

For example, training data, based on which an AI/ML training phase (1) may be performed, may comprise input training data and processing information training data. In some embodiments, the input training data may comprise data related to one or more of the followings: one or more characteristics of the input multimedia contents, such as type of content of the input multimedia content (also referred to as "asset") ("type of asset", e.g. cartoon, soccer match, etc.), duration of the multimedia content ("asset duration"), resolution of the multimedia content ("asset resolution"), and encoding parameters, such as audio and video codecs to be used for encoding the audio content and video content of the input multimedia content, respectively ("audio & video codecs"), type of output of the encoding of the multimedia content ("type of output"), and number of outputs ("number of outputs").

With respect to the machine learning model that may be used to implement in some embodiments the proposed method, a gradient boosting regression model may be considered in embodiments in which the outputs provided by the neural network are numerical values. In some embodiments, the training of the supervised learning algorithm may be continuously pursued, in order to improve such training, and/or to adapt to changes in the input data and the output data resulting therefrom. For one or more or, depending on the embodiment, each prediction of processing resources generated by the neural network implementing the supervised learning algorithm, a training vector may be generated with corresponding input data and prediction data. The training vector may be fed back to the neural network as training data.

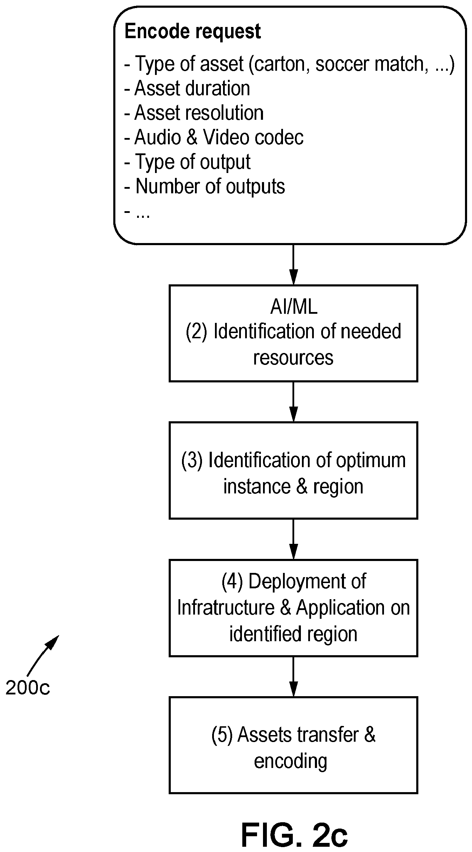

In one or more embodiments, the neural network operating in inference mode may be configured and trained, to generate (2), based on an encoding request comprising input data, through the supervised learning algorithm implemented by the neural network, a prediction that comprises an identification of needed resources for encoding the input multimedia content. Shown on Fig. 2c is an encoding request comprising one or more characteristics of the input multimedia contents, such as type of content of the input multimedia content (also referred to as "asset") ("type of asset", e.g. cartoon, soccer match, etc.), duration of the multimedia content ("asset duration"), resolution of the multimedia content ("asset resolution"), and encoding parameters, such as audio and video codecs to be used for encoding the audio content and video content of the input multimedia content, respectively ("audio & video codecs"), type of output of the encoding of the multimedia content ("type of output"), and number of outputs ("number of outputs"). That is, input data used for the inference phase may be in the same or a similar format, and include content corresponding to the training input data described above.

In one or more embodiments, the neural network operating in inference mode may be configured and trained, to generate (3), based on an encoding request comprising input data, through the supervised learning algorithm implemented by the neural network, a prediction that further comprises an identification of an optimum cloud instance and region. The identification of a cloud instance and a geographic region that are considered optimum for encoding the input multimedia content advantageously allows obtaining a cloud instance in a region that would be suitable for encoding the input multimedia content for which the encoding latency can be reduced in the proposed region.

In one or more embodiments, the proposed method may further comprise deploying (4) an encoding infrastructure and an encoding application on the identified region, and transferring and encoding (5) the input multimedia content by executing the application on the deployed infrastructure with the input multimedia content provided as input data. For example, the an input multimedia content file may be transferred to a memory of the identified encoding infrastructure. The deploying the encoding infrastructure and encoding application may comprise determining a processing configuration for configuring the encoding infrastructure and/or encoding application for encoding the input multimedia content.

In one or more embodiments, the proposed method may further comprise determining whether one or more of the estimated values generated by the neural network belong to a predetermined range. In some embodiments, the estimated values that do not belong to the predetermined range may be clipped. For example, if the estimate for a parameter exceeds the maximum value permissible for that parameter (or is less than the minimum value permissible), then it is clipped to the maximum (respectively minimum) value.

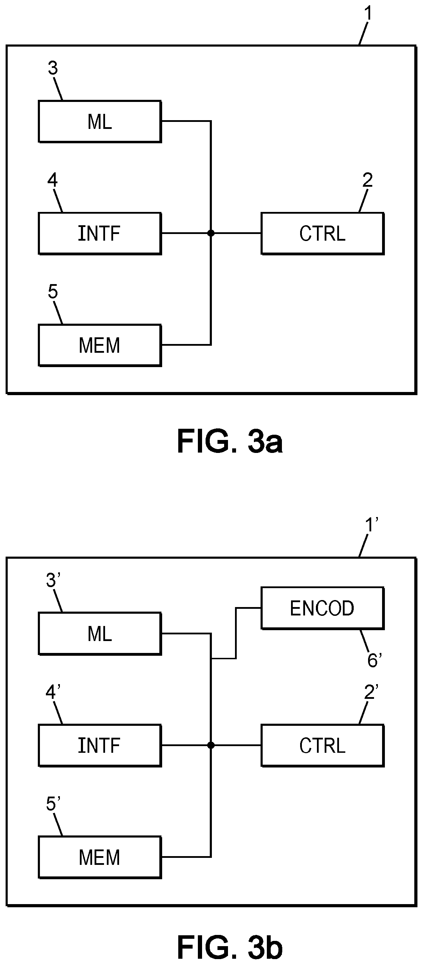

An exemplary architecture of an apparatus, such as a computing platform or a computing server, for example in a cloud, according to the present subject disclosure is illustrated on Fig. 3a which shows an apparatus 1 configured to perform a method for managing encoding of a multimedia content in accordance with embodiments of the present subject disclosure.

The apparatus 1, which may comprise one or more computers, includes a control engine 2, a machine learning engine 3, a data interface engine 4, and a memory 5.

In the architecture illustrated on Fig. 3a, all of the machine learning engine 3, data interface engine 4, and memory 5 are operatively coupled with one another through the control engine 2.

In some embodiments, the machine learning engine 3 is configured to perform various aspects of embodiments of one or more of the proposed methods as described herein, such as, when operating in an inference mode, determining a prediction of processing resources required for encoding the multimedia content, based on one or more multimedia content characteristics of the multimedia content and on one or more multimedia content encoding parameters for encoding the multimedia content provided as input data to a neural network implemented by the machine learning engine 3. The machine learning engine 3 may further be configured to operate in a training mode to train the neural network based on training data. In some embodiments, the machine learning engine 3 may be configured for implementing an artificial intelligence algorithm using a neural network, such as for example a supervised learning algorithm. The machine learning engine 3 may additionally be configured for implementing the functions or embodiments provided in the present subject disclosure with respect to training the artificial intelligence algorithm or using the artificial intelligence algorithm for obtaining predictions, for example of processing resources.

In some embodiments, the data interface engine 4 is configured to receive an input multimedia content, for example in the format of a multimedia content file, and to output a processing configuration for the encoding of the multimedia content.

The control engine 2 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2 may also comprise, or may be in communication with, computer storage media, such as, without limitation, the memory 5, capable of storing computer program instructions or software code that, when executed by the processor, causes the processor to perform the elements described herein. In addition, the memory 5 may be any type of data storage or computer storage medium, coupled to the control engine 2 and operable with the data interface engine 4 and the machine learning engine 3 to facilitate management of data stored in association therewith, such as, for example, a cache memory, a data farm, a data warehouse, a data mart, a datacenter, a data cloud, or a combination thereof.

In embodiments of the present subject disclosure, the apparatus 1 is configured for performing one or more of the methods described herein. The apparatus 1 may in some embodiments be included in a video processor or, depending on the embodiments, in a video encoder or a video codec.

It will be appreciated that the apparatus 1 shown and described with reference to Fig. 3a is provided by way of example only. Numerous other architectures, operating environments, and configurations are possible. Other embodiments of the node may include fewer or greater number of components, and may incorporate some or all of the functionality described with respect to the apparatus components shown in Fig. 3a. Accordingly, although the control engine 2, machine learning engine 3, data interface engine 4, and memory 5 are illustrated as part of the apparatus 1, no restrictions are placed on the location and control of these components. In particular, in other embodiments, any of these components may be part of different entities or computing systems.

Another exemplary architecture of an apparatus, such as a processing node or a video encoder, according to the present subject disclosure is illustrated on Fig. 3b which shows an apparatus 1' configured to perform a method for managing encoding of a multimedia content in accordance with embodiments of the present subject disclosure.

The apparatus 1', which may comprise one or more computers, includes a control engine 2', a machine learning engine 3', a data interface engine 4', a memory 5', and an encoding engine 6'.

In the architecture illustrated on Fig. 3b, all of the machine learning engine 3', data interface engine 4', memory 5' and encoding engine 6' are operatively coupled with one another through the control engine 2'.

In some embodiments, the machine learning engine 3' is configured to perform various aspects of embodiments of one or more of the proposed methods as described herein, such as, when operating in an inference mode, determining a prediction of processing resources required for encoding the multimedia content, based on one or more multimedia content characteristics of the multimedia content and on one or more multimedia content encoding parameters for encoding the multimedia content provided as input data to a neural network implemented by the machine learning engine 3'. The machine learning engine 3' may further be configured to operate in a training mode to train the neural network based on training data. In some embodiments, the machine learning engine 3' may be configured for implementing an artificial intelligence algorithm using a neural network, such as for example a supervised learning algorithm. The machine learning engine 3' may additionally be configured for implementing the functions or embodiments provided in the present subject disclosure with respect to training the artificial intelligence algorithm or using the artificial intelligence algorithm for obtaining predictions, for example of processing resources.

In some embodiments, the data interface engine 4' is configured to receive an input multimedia content, for example in the format of a multimedia content file, and to output a processing configuration for the encoding of the multimedia content.

In some embodiments, the encoding engine 6' is configured to receive an input multimedia content as input data, and to encode (e.g. video encode video content) data of the input multimedia content according to a processing configuration determined according to one or more embodiments of the proposed method. In particular, the encoding engine 6' may be configured to receive, for example from the machine learning engine 3', configuration data for configuring the encoding engine 6', such configuration data being determined based on a processing configuration determined according to one or more embodiments of the proposed method. For example, data of such processing configuration may be mapped into configuration parameters of the encoding engine 6', for example using a predefined table of correspondence (e.g. a look-up table).

The control engine 2' includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2' may also comprise, or may be in communication with, computer storage media, such as, without limitation, the memory 5', capable of storing computer program instructions or software code that, when executed by the processor, causes the processor to perform the elements described herein. In addition, the memory 5' may be any type of data storage or computer storage medium, coupled to the control engine 2' and operable with the data interface engine 4' and the machine learning engine 3' to facilitate management of data stored in association therewith, such as, for example, a cache memory, a data farm, a data warehouse, a data mart, a datacenter, a data cloud, or a combination thereof.

In embodiments of the present subject disclosure, the apparatus 1' is configured for performing one or more of the methods described herein. The apparatus 1' may in some embodiments be included in a video processor or, depending on the embodiments, in a video encoder or a video codec.

It will be appreciated that the apparatus 1' shown and described with reference to Fig. 3b is provided by way of example only. Numerous other architectures, operating environments, and configurations are possible. Other embodiments of the node may include fewer or greater number of components, and may incorporate some or all of the functionality described with respect to the apparatus components shown in Fig. 3b. Accordingly, although the control engine 2', machine learning engine 3', data interface engine 4', and memory 5' are illustrated as part of the apparatus 1', no restrictions are placed on the location and control of these components. In particular, in other embodiments, any of these components may be part of different entities or computing systems.

The proposed method may be used for the processing, for purposes of encoding or compression of input data which may correspond, depending on the embodiment, to an image, a picture, a video frame, a video sequence, video content or video data.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. Method for managing encoding of multimedia content stored in a file, comprising:
• determining, using a supervised learning algorithm, a prediction of processing resources required for encoding the multimedia content, based on one or more multimedia content characteristics of the multimedia content and on one or more multimedia content encoding parameters for encoding the multimedia content; and
• determining a processing configuration for encoding the multimedia content based on the prediction of processing resources.

2. The method according to claim 1, further comprising: encoding the multimedia content by a video encoder configured with the processing configuration.

3. The method according to any of the preceding claims, wherein the processing configuration comprises a configuration of a cloud instance, and wherein the encoding the multimedia content is performed by the cloud instance configured with the configuration of the cloud instance.

4. The method according to any of the preceding claims, further comprising a training phase for training a neural network implementing the supervised learning algorithm performed on a plurality of training multimedia content files, the training phase comprising, for a training multimedia content file of the plurality of training multimedia content files:
• determining, based on the training multimedia content file, a reference prediction of processing resources required for encoding a training multimedia content contained in the training multimedia content file,
• performing training of the neural network based on input data comprising one or more multimedia content characteristics of the training multimedia content and on one or more multimedia content encoding parameters for encoding the training multimedia content, and based on the reference prediction of processing resources, to generate a prediction model for predicting a prediction of processing resources required for encoding multimedia content.

5. The method according to claim 4, wherein the training phase further comprises, for the training multimedia content file:
• performing a plurality of encodings of the training multimedia content file using respective combinations of the one or more multimedia content encoding parameters;
• determining, for each of the plurality of encodings, a respective result.

6. The method according to claim 5, wherein one or more of the respective results comprise a respective combination of one or more performance metrics.

7. The method according to any of the preceding claims, wherein the one or more multimedia content characteristics are of one or more of the following types of characteristic: a type of the multimedia content, a duration of the multimedia content, a resolution of the multimedia content, one or more video characteristics of the multimedia content, and one or more audio characteristics of the multimedia content.

8. The method according to any of the preceding claims, wherein the one or more multimedia content encoding parameters are of one or more of the following types of encoding parameters: a video compression standard, a number of output streams and their corresponding resolution, bitrate and/or quality setting, pre-processing requirements, an audio compression standard, and a required turnaround time.

9. The method according to any of the preceding claims, wherein the prediction of processing resources comprises one or more resources of one or more of the following types of processing resource: type of public cloud instance, CPU resources, RAM resources, storage type, public cloud provider, and time of the day.

10. The method according to any of the preceding claims, wherein the prediction of processing resources comprises a performance level associated with processing resources, and corresponding to one or more performance metrics, and wherein the processing configuration is determined based on the performance level of the associated processing resources.

11. The method according to any of claims 6 and 10, wherein one or more of the performance metrics are of one or more of the following types of performance metrics: time to encode, encoding speed versus real time, average CPU usage, peak CPU usage, average memory usage, peak memory usage, amount of storage usage, type of storage usage, visual quality of output stream, bit-rate of output stream.

12. The method according to any of the preceding claims, further comprising: determining the one or more characteristics of the multimedia content based on the multimedia content, wherein the one or more characteristics are of respective predetermined types of characteristic.

13. The method according to any of the preceding claims, further comprising: obtaining one or more multimedia content classes, and selecting a multimedia content class among the one or more multimedia content classes based on the one or more characteristics of the multimedia content, wherein the prediction of processing resources is determined based on the selected multimedia content class.

14. An apparatus, the apparatus comprising a processor and a memory operatively coupled to the processor, wherein the apparatus is configured to perform a method according to any of claims 1 to 13.

15. A computer program product comprising computer program code tangibly embodied in a computer readable medium, said computer program code comprising instructions to, when provided to a computer system and executed, cause said computer to perform a method according to any of claims 1 to 13.
